# NEW EUROPEAN PATENT SPECIFICATION

(11) **EP 2 597 963 B2**
(45) Date of publication and mention of the opposition decision: **02.10.2024**
(45) Mention of the grant of the patent: 27.07.2016
(21) Application number: 11745645.9
(22) Date of filing: 03.08.2011
(51) Int. Cl.: A23K 40/25, A23K 40/30, A23K 50/42

(54) **METHOD FOR MAKING A PET FOOD COMPOSITION HAVING ANTIMICROBIAL ACTIVITY**
VERFAHREN ZUR HERSTELLUNG VON EINER TIERFUTTERZUSAMMENSETZUNG AUFWEISEND EINE ANTIMIKROBIELLE WIRKUNG
PROCÉDÉ DE PRÉPARER D'UNE COMPOSITION D'ALIMENT POUR ANIMAUX PRÉSENTANT UNE ACTIVITÉ ANTIMICROBIENNE

(30) Priority: 03.08.2010 US 370328 P
(43) Date of publication of application: 05.06.2013
(60) Divisional application: 16175034.4
(73) Proprietor: Hill's Pet Nutrition, Inc., Topeka, KS 66603 (US)
(72) Inventor: MONTELONGO, Luis J., Lawrence Kansas 66047 (US); POPE, Brent K., Topeka Kansas 66614 (US); MARTINEZ, Sarah B., Lawrence Kansas 66047 (US)
(74) Representative: Wichmann, Hendrik
(86) International application number: PCT/US2011/046422
(87) International publication number: WO 2012/018913

(56) References cited:
- EP-A1- 1 483 975
- WO-A1-00/10405
- WO-A1-2006/004481
- WO-A1-2010/146060
- WO-A2-2004/019683
- JP-B2- 3 155 453
- US-A- 3 962 462
- US-A- 4 049 835
- US-A- 4 191 783
- US-A- 4 212 894
- US-A- 4 444 796
- US-A- 5 505 976
- US-A1- 2001 002 272
- US-A1- 2004 156 884
- "Acidifiers in Animal Nutrition", 2007, ISBN: 9781904761402, article STONEROCK RALPH: "Possibilities of Salmonella control with aid of acidifiers", pages: 21 - 29
- GALEN J. ROKEY: "pet food production: process description", ENGORMIX, 9 August 2006 (2006-08-09), Retrieved from the Internet <URL:http://en.engormix.com/feed-machinery/articles/pet-food-production-t33431.htm>
- STRAUSS ET AL.: "Effects of organic acids on microorganisms, Preventing health relevant contaminations in feed", KRAFTFUTTER, vol. 4, 2001, pages 1 - 4
- Jorgensen et al., 2001, Effect of pelleting and use of lactic acid in feed on Salmonella prevalence and productivity in weaners. In: Proceedings of the 4' International Symposium on the Epidemiology and Control of Salmonella and other Food Borne Pathogens in Pork, Leipzig, Germany,September 2 to 5: 109-112

## Description

### FIELD OF THE INVENTION

The present invention relates to new methods for making pet food compositions, having antimicrobial activity against *Salmonella.*

### BACKGROUND OF THE INVENTION

Food compositions, particularly pet food compositions, are subject to microbial, particularly bacterial contamination, by pathogens such as *Salmonella, Listeria, E. coli* and *Clostridium.* Finding effective antimicrobial agents for this purpose has proven challenging, as it is necessary that the agents be safe, palatable, cost-effective and stable, as well as effective. Dried pet food compositions in particular are susceptible to microbial contamination in the post-processing phase.

Numerous chemical or natural antimicrobial agents can be used to control bacteria, mold and yeast in foods. Chemical antimicrobials commonly used in the food industry are phosphoric acid, propionic acid and propionates, sulfites, benzoic acid and benzoates, nitrites, nitrates and parabens. Palatants used in the pet food industry might also have antimicrobial nature because of their acidic pH (∼2-3).

Propionic acid has been reported to inhibit the growth of *Salmonella.* Phosphoric acid has also been identified to have antimicrobial activity. Based on pH, propionic acid has the highest antimicrobial activity followed by lactic, acetic, citric, phosphoric and hydrochloric.

Lactic acid is known to have antimicrobial properties at higher levels, but due to its high acidity, it is usually provided in salt form, e.g., as the sodium, potassium or calcium lactate. Levels of lactic acid in companion animal food compositions are generally fairly low, e.g., below 1%%. Lactic acid bacteria is sometimes considered to be a probiotic, in that providing lactic acid favors the growth of certain bacteria which produce and are tolerant to lactic acid, such as *Lactobacillus, Pediococcus* and *Bifidobacterium,* which are thought to confer health benefits, e.g., reducing lactose intolerance, reducing the risk of colon cancer, lowering cholesterol, improving immune function, and reducing the incidence of antibiotic-associated diarrhea.

### SUMMARY OF THE INVENTION

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

After extensive screening and optimization, it has been found that pet food compositions having inorganic acids, organic acids, natural antimicrobials, flavors, palatants, phenols, fermented products, oregano, amino acids, fatty acids and mixtures thereof were shown to retard the growth of microbials including pathogenic bacteria such as gram negative or gram positive bacteria or *Salmonella* species bacteria and spoilage microorganisms including yeasts and molds, in pet food compositions.

A use of lactic acid is described herein to impart antimicrobial activity against *Salmonella* in a dry cat food composition or in a dry dog food composition, wherein the lactic acid is present in the composition in an amount of from 0.1% to 3%.

The present invention provides a method for making a pet food composition having antimicrobial activity against *Salmonella* comprising the following steps:
a. preconditioning by mixing wet and dry ingredients at elevated temperature to form a kibble dough;
b. extruding the kibble dough at a high temperature and pressure;
c. drying the extruded kibble; and
d. enrobing the dried kibble with topical liquid and/or dry ingredients;
wherein an ingredient which imparts an antimicrobial effect on the composition is applied to the kibble at step a and/or d in an amount of 1 % to 3% by weight of the composition,
wherein the antimicrobial ingredient has activity against *Salmonella,* the composition is a dry cat food or dry dog food, and wherein the ingredient is lactic acid.

Further, a method of inhibiting microbial growth in a pet food composition is described herein, the method comprising adding an ingredient in an effective amount to impart an antimicrobial effect to the composition, wherein the ingredient is in the composition 0.1 weight % to 3 weight %, composition is a dry cat food or a dry dog food and wherein the ingredient is lactic acid.

The present description encompasses pet food compositions comprising an ingredient in an effective amount to impart an antimicrobial effect.

In one aspect, the ingredient has antimicrobial activity against a pathogenic bacteria and spoilage microorganisms including yeasts and molds. The pathogen may be a gram negative or gram positive bacteria, or *Salmonella (S.* aarhus, *S*. *muenster El and S*. *worthington*), *Listeria, E. coli or Clostridium,* or mixtures thereof.

In another aspect, the ingredient is selected from the group comprising inorganic acids, organic acids, natural antimicrobials, flavors, palatants, phenols, fermented products, oregano, amino acids, fatty acids and mixtures thereof.

In another aspect, the organic acid is lactic acid.

Documents US2004/0156884, US 3,962,462 and WO 2006/004481 disclose microbially stable feed compositions.

### BRIEF DESCRIPTION OF THE DRAWINGS

The present invention will become more fully understood from the detailed description and the accompanying drawings, wherein:
Figure 1. Canine dry food with Lactic Acid added at Preconditioner and Incubated at 30°C.
Figure 2. Canine dry food with Lactic Acid added Topically and Incubated at 30°C.
Figure 3. Canine dry food with Propionic Acid added at Preconditioner and Incubated at 30°C.
Figure 4. Canine dry food with Propionic Acid added Topically and Incubated at 30°C.
Figure 5. Canine dry food with a phenol having a pH of 2-2.5 added at Preconditioner and Incubated at 30°C.
Figure 6. Canine dry food with a phenol having a pH of 2-2.5 added Topically and Incubated at 30°C.
Figure 7. Canine dry food with Lauric Arginate added at Preconditioner and Incubated at 30°C.
Figure 8. Canine dry food with Lauric Arginate added Topically and Incubated at 30°C.
Figure 9. Canine dry food with Propionic Acid added Topically and Incubated at 30°C (Point of Contamination Finished Product).
Figure 10. Canine dry food with Propionic Acid added at Preconditioner and Incubated at 30°C (Point of Contamination Finished Product).
Figure 11. Canine dry food with Propionic Acid added Topically/Preconditioner and Incubated at 30°C (Point of Contamination Finished Product).
Figure 12. Canine dry food with Propionic Acid Added Topically and Coated and Incubated at 30°C (Point of Contamination kibble before enrobing).
Figure 13. Canine dry food with Propionic Acid added at Preconditioner and Coated and Incubated at 30°C (Point of Contamination kibble before enrobing).
Figure 14. Canine dry food with Propionic Acid added Topically/Preconditioner and Coated and Incubated at 30°C (Point of Contamination kibble before enrobing).
Figure 15. Canine dry food with Propionic Acid added at Preconditioner and Incubated at 70°C (Point of Contamination Air Lift).
Figure 16. Canine dry food with Propionic Acid added at Preconditioner and Incubated at 50°C (Point of Contamination: Entering the Dryer).
Figure 17. Canine dry food with Propionic Acid added at Preconditioner and Incubated at 70°C (Temperature begins to rise).
Figure 18. Canine dry food with Propionic Acid added at Preconditioner and Incubated at 50°C (Point of Contamination: Evaporative Cooling).
Figure 19. Canine dry food with Lactic Acid added Topically and Incubated at 30°C (Point of Contamination Finished Product).
Figure 20. Canine dry food with Lactic Acid added at Preconditioner and Incubated at 30°C (Point of Contamination Finished Product).

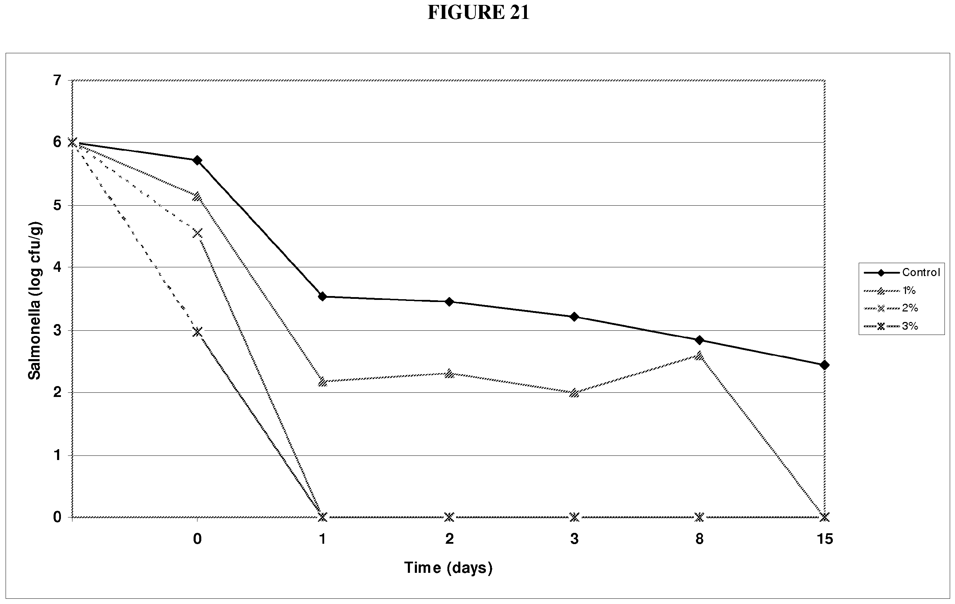

Figure 21. Canine dry food with Lactic Acid added Topically/Preconditioner and Incubated at 30°C (Point of Contamination Finished Product).

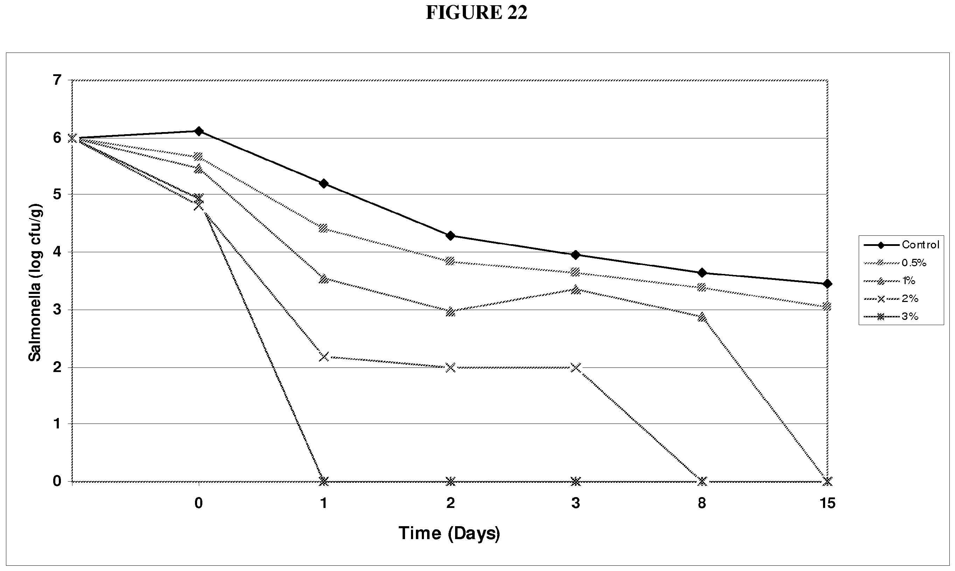

Figure 22. Canine dry food with Lactic Acid Added Topically and Coated and Incubated at 30°C (Point of Contamination kibble before enrobing).

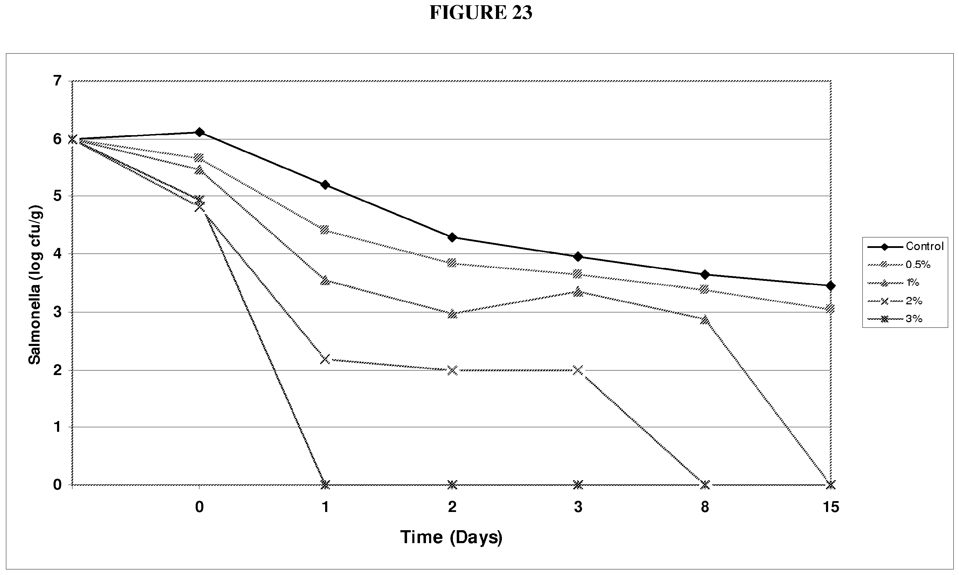

Figure 23. Canine dry food with Lactic Acid added at Preconditioner and Coated and Incubated at 30°C (Point of Contamination kibble before enrobing).

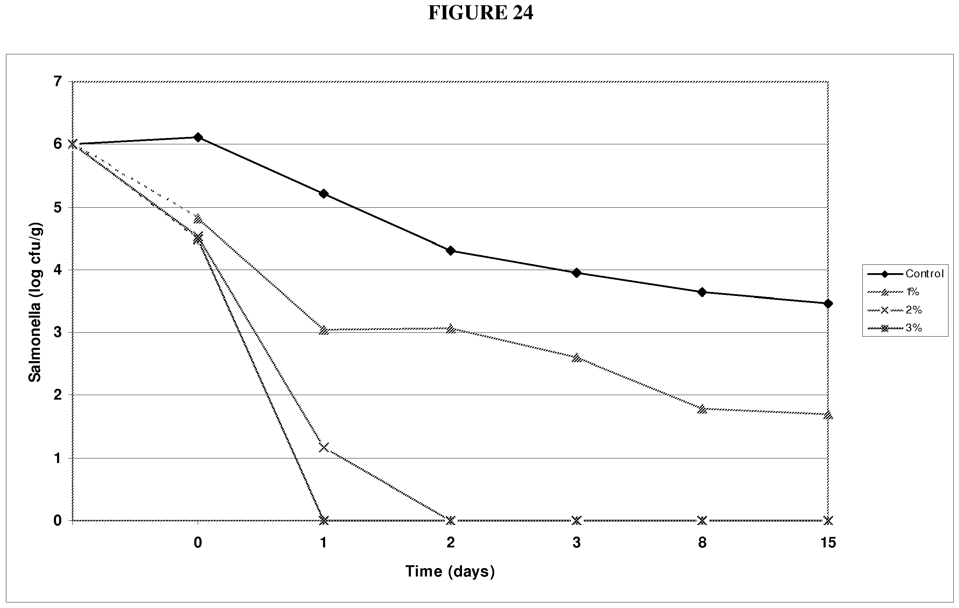

Figure 24. Canine dry food with Lactic Acid added Topically/Preconditioner and Coated and Incubated at 30°C (Point of Contamination kibble before enrobing).

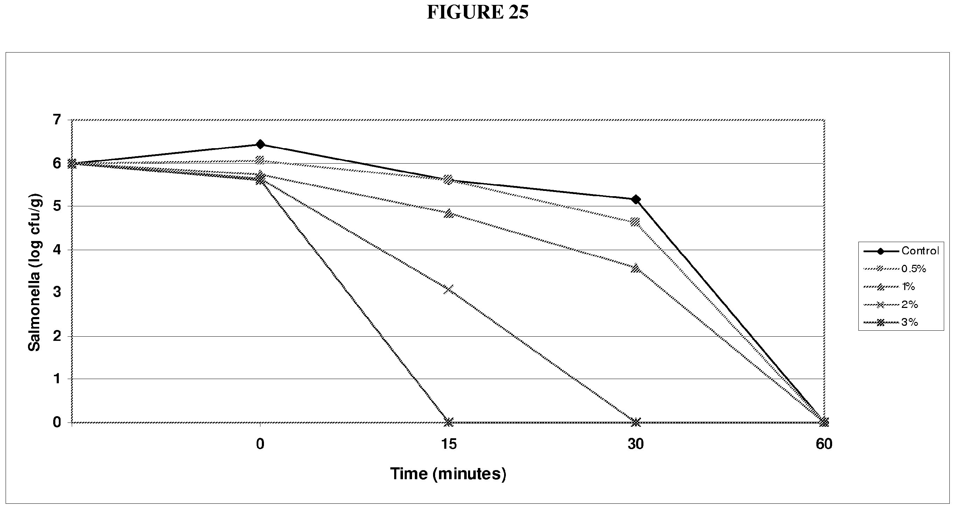

Figure 25. Canine dry food with Lactic Acid added at Preconditioner and Incubated at 70°C (Point of Contamination Air Lift).

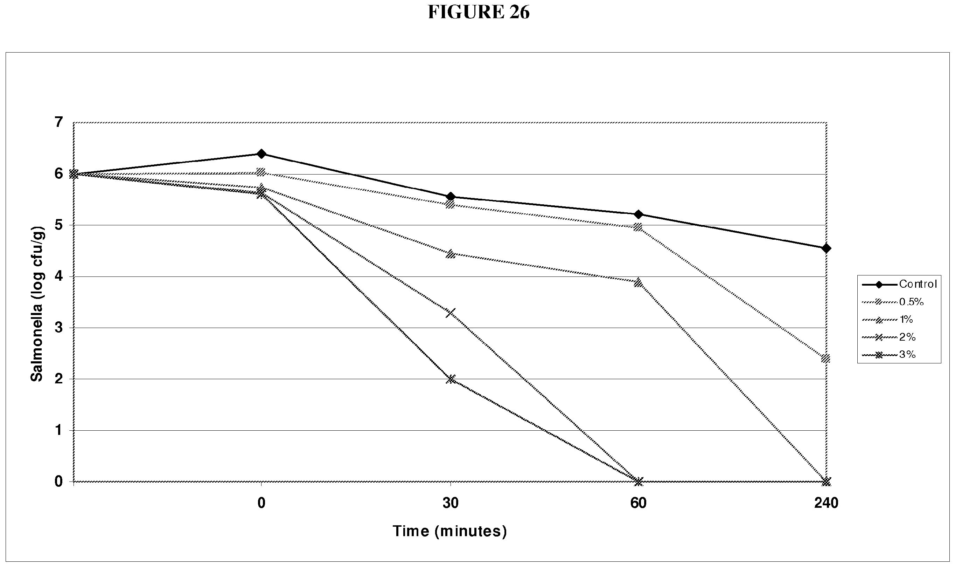

Figure 26. Canine dry food with Lactic Acid added at Preconditioner and Incubated at 50°C (Point of Contamination: Entering the Dryer).

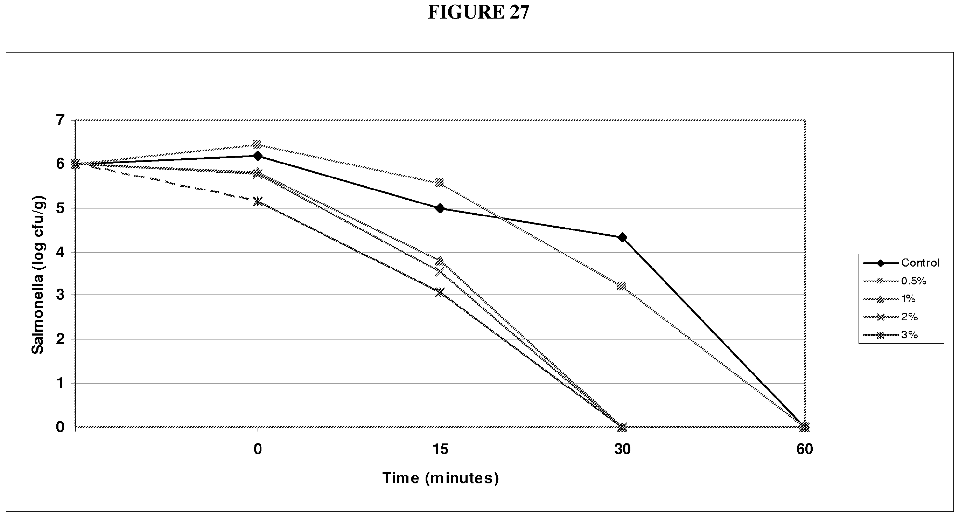

Figure 27. Canine dry food with Lactic Acid added at Preconditioner and Incubated at 70°C (Temperature begins to rise).

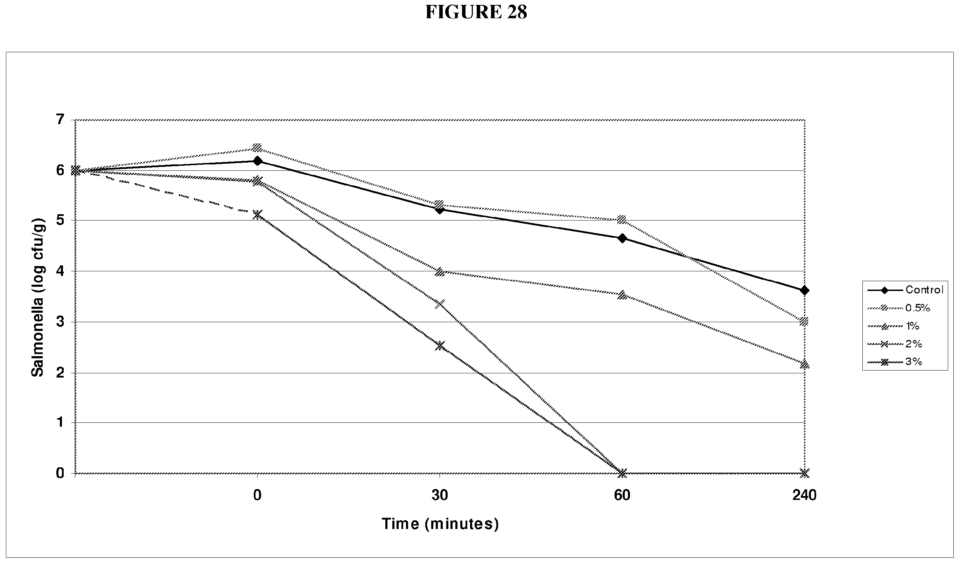

Figure 28. Canine dry food with Lactic Acid added at Preconditioner and Incubated at 50°C (Point of Contamination: Evaporative Cooling).

### DETAILED DESCRIPTION OF THE INVENTION

The following description of the preferred embodiment(s) is merely exemplary in nature and is in no way intended to limit the invention, its application, or uses.

The present description encompasses pet food compositions comprising an ingredient in an effective amount to impart an antimicrobial effect to the composition.

In one aspect, the ingredient has antimicrobial activity against a pathogenic bacteria and spoilage microorganisms including yeasts and molds. The pathogen may be a gram negative or gram positive bacteria, or *Salmonella, Listeria, E. coli or Clostridium,* or mixtures thereof.

In another aspect, the ingredient is selected from the group comprising inorganic acids, organic acids, natural antimicrobials, flavors, palatants, phenols, fermented products, oregano, amino acids, fatty acids and mixtures thereof.

Inorganic acids of the present description comprise phosphoric acid.

Organic acids of the present description comprise sodium lactate, sodium diacetate, potassium lactate, lactic acid, lauric arginate, propionic acid, calcium propionate, sodium propionate, zinc propionate, acetic acid, citric acid, malic acid, fumaric acid, adipic acid, succinic acid, tartaric acid, and mixtures thereof.

Natural antimicrobials of the present description comprise lacto antimicrobials (lactoferrin, lactoperoxidase, lactoglobulines, and lactolipids), ovo antimicrobials (lysozyme, ovotransferrin, ovoglobulin IgY and Avidin), phyto antimicrobials (phyto-phenols, saponins, flavonoids, thiosulfinates, catechins, glucosinolates and agar), bacto antimicrobials (probiotics, nisin, pediocin, and reuterin) and mixtures thereof.

Phenols comprise those having a pH about 2, about 2.5, about 3, about 3.5, about 4, about 4.5, about 4.8, about 5, about 5.5, about 6.

Fermented products of the present description comprise cultured dextrose.

In the present invention, lactic acid is used to impart antimicrobial activity against *Salmonella* in a dry dog food composition or in a dry cat food composition.

The lactic acid is present in the composition in an amount of 1%, about 2%, 3%, from 1% to 3%, by weight.

In one embodiment, the pH of the composition is less than 5.5.

The present invention pertains to methods of making food compositions having antimicrobial activity and specifically, which have antimicrobial activity against *Salmonella.* The method for making a pet food composition comprises the following steps:
a. preconditioning by mixing wet and dry ingredients at elevated temperature to form a kibble dough;
b. extruding the kibble dough at a high temperature and pressure;
c. drying the extruded kibble; and
d. enrobing the dried kibble with topical liquid and/or dry ingredients;
wherein an ingredient which imparts an antimicrobial effect to the composition is applied to the kibble at step a and/or d, in an amount of from 1% to 3% by weight of the kibble, wherein the ingredient has antimicrobial activity against *Salmonella,* wherein the composition is a dry cat food or a dry dog food, and wherein the ingredient is lactic acid.

In an embodiment, the composition comprises from 1% to 3% lactic acid and has a pH of from about 4 to about 5.

Further, a method of inhibiting microbial growth in a pet food composition is described herein, the method comprising adding an ingredient in an effective amount to impart an antimicrobial effect to the composition.

In the present invention, the ingredient is present in the composition in an amount of from 1 % to 3% by weight of the composition, the ingredient is lactic acid, and the composition is a dry dog food or a dry cat food.

In an embodiment, the composition comprises from 1% to 3% lactic acid and has a pH of from about 4 to about 5.

In another embodiment, the lactic acid is present in the composition in an amount of 1%, about 2%, or 3%.

Further, a method of inhibiting microbial growth is described herein, the method comprising adding an ingredient in an amount of about 0.1%, about 0.13%, about 0.15%, about 0.2%, about 0.25%, about 0.3%, about 0.4%, about 0.5%, about 1%, about 2%, about 3%, from about 0.1 % to about 3%, by weight of the composition, to the food, for example by applying the ingredient to a dried kibble product.

The compositions, in addition to the ingredient which imparts an antimicrobial effect, include at least one component suitable for consumption by a companion animal including, but not limited to, fats, carbohydrates, proteins, fibers, nutritional balancing agents such as vitamins, minerals, and trace elements, and mixtures thereof. One of ordinary skill in the art can select the amount and type of food ingredients for a typical food based upon the dietary requirements of the animal, for example, the animal's species, age, size, weight, health, and function.

The food ingredient part of the food composition can include up to about 100% of any particular food ingredient or can include a mixture of food ingredients in various proportions. In certain embodiments, the food composition includes a combination of food ingredients in amounts of about 0 wt. % to about 50 wt. % fat, about 0 wt. % to about 75 wt. % carbohydrate, about 0 wt. % to about 95 wt. % protein, about 0 wt. % to about 40 wt. % dietary fiber, and about 0 wt. % to about 15 wt. % of one or more nutritional balancing agents.

In certain embodiments, the fat and carbohydrate food ingredient is obtained from a variety of sources such as animal fat, fish oil, vegetable oil, meat, meat by-products, grains, other animal or plant sources, and mixtures thereof. Grains include wheat, corn, barley, and rice.

In certain embodiments, the protein food ingredient is obtained from a variety sources such as plants, animals, or both. Animal protein includes meat, meat by-products, dairy, and eggs. Meats include the flesh from poultry, fish, and animals such as cattle, swine, sheep, goats, and the like, meat by-products include lungs, kidneys, brain, livers, stomachs, and intestines. The protein food ingredient may also be free amino acids and/or peptides. Preferably, the protein food ingredient includes meat, a meat by-product, dairy products, or eggs.

In certain embodiments, the fiber food ingredient is obtained from a variety of sources such as vegetable fiber sources, for example, cellulose, beet pulp, peanut hulls, and soy fiber.

In certain embodiments, the nutritional balancing agents are obtained from a variety of sources known to skilled artisans, for example, vitamin and mineral supplements and food ingredients. Vitamins and minerals can be included in amounts required to avoid deficiency and maintain health. These amounts are readily available in the art. The American Feed Control Officials (AAFCO) provides recommended amounts of such nutrients for dogs and cats. Vitamins generally useful as food additives include vitamin A, vitamin B1, vitamin B2, vitamin B6, vitamin B12, vitamin D, biotin, vitamin K, folic acid, inositol, niacin, and pantothenic acid. Minerals and trace elements useful as food additives include calcium, phosphorus, sodium, potassium, magnesium, copper, zinc, chloride, iron, selenium, iodine, and iron.

In certain embodiments, the food compositions may contain additional ingredients such as vitamins, minerals, fillers, palatability enhancers, binding agents, flavors, stabilizers, emulsifiers, sweeteners, colorants, buffers, salts, coatings, and the like known to skilled artisans. Stabilizers include substances that tend to increase the shelf life of the composition such as preservatives, synergists and sequestrants, packaging gases, stabilizers, emulsifiers, thickeners, gelling agents, and humectants. Examples of emulsifiers and/or thickening agents include gelatin, cellulose ethers, starch, starch esters, starch ethers, and modified starches. Specific amounts for each composition component, food ingredient, and other ingredients will depend on a variety of factors such as the particular components and ingredients included in the composition; the species of animal; the animal's age, body weight, general health, sex, and diet; the animal's consumption rate; the type of disease or condition being treated; and the like. Therefore, the component and ingredient amounts may vary widely and may deviate from the preferred proportions described herein.

In one illustrative embodiment, the composition may, for example, in addition to ingredient having antimicrobial activity also include at least one of the following:
(a) about 0 wt. % to about 95 wt. % protein,
(b) about 0% to about 75% carbohydrate,
(d) about 0% to about 50% fat,
(d) about 0% to about 40% dietary fiber, and
(e) about 0% to about 15% of one or more nutritional balancing agents.

Compositions may include ingredients as are typically found in dog and cat food, for example dry canine foods may comprise mixtures of some or all of the following ingredients: Whole Grain Corn, Soybean Mill Run, Chicken By-Product Meal, Powdered Cellulose, Corn Gluten Meal, Soybean Meal, Chicken Liver Flavor, Soybean Oil, Flaxseed, Caramel Color, Iodized Salt, L-Lysine, Choline Chloride, Potassium Chloride, vitamins (L-Ascorbyl-2-Polyphosphate (source of vitamin C), Vitamin E Supplement, Niacin, Thiamine Mononitrate, Vitamin A Supplement, Calcium Pantothenate, Biotin, Vitamin B12 Supplement, Pyridoxine Hydrochloride, Riboflavin, Folic Acid, Vitamin D3 Supplement), Vitamin E Supplement, minerals (e.g., Ferrous Sulfate, Zinc Oxide, Copper Sulfate, Manganous Oxide, Calcium Iodate, Sodium Selenite), Taurine, L-Carnitine, Glucosamine, Mixed Tocopherols, Beta-Carotene, Rosemary Extract.

In various embodiments, the pet food composition comprises a wet or dry food composition, which may be in the form of a moist food, semi-moist food, dry food, supplement or treat. The pet food composition may be in kibble form. The pet food composition may be suitable for a canine or a feline. The ingredient having antimicrobial activity may be incorporated therein or on the surface of any food composition, such as, by spraying or precipitation thereon or may be added to the diet by way of snack, supplement, treat or in the liquid portion of the diet such as water or another fluid.

Unless otherwise specified, all percentages and amounts expressed herein and elsewhere in the specification should be understood to refer to percentages by weight. The amounts given are based on the active weight of the material.

### EXAMPLES

Ingredients (Table 1) were screened for antimicrobial activity against *Salmonella (S. aarhus*, *S. muenster El* and *S. worthington*).

**Table 1. Ingredients with Potential Antimicrobial Activity**

| **Type** | **Ingredient** |
|---|---|
| Inorganic acid | Phosphoric Acid |
| Organic Acid | 92% Sodium Lactate and 6% sodium diacetate |
| | 98% Sodium Lactate |
| | 88% Lactic acid |
| | 60% Sodium Lactate |
| | 73% Potassium Lactate and 5% Sodium Diacetate |
| | Lauric Arginate |
| | Propionic Acid |
| | Ca propionate |
| | Ca propionate, 5% Na propionate |
| | Ca propionate, Zn propionate |
| Phyto-AMI | Oregano Oleoresin |
| Bacto AMI | Cultured Dextrose |
| | Higher levels of phenol groups. pH 4.25-4.85 |
| Phenols | Higher levels of phenol groups. pH 4.8-6.0 |
| | Higher levels of phenol groups. pH 2-2.5 |
| | Higher levels of phenol groups. pH 2-2.5 |
| Misc chemical | Sodium Bisulfate |

### Example 1 - Disc Diffusion Test

This test is typically used for antibiotic sensitivity in bacteria and was adapted to measure *Salmonella* growth suppression by ingredients with potential antimicrobial (AMI) activity. Discs of filter paper, approximately 5 mm in diameter, were soaked in an AMI at 1%, 2%, and 3%, except for oregano, which was soaked at 0.1%, 0.2% and 0.4% solution and placed on a Petri dish with standard methods agar with tetraphenyltetrazolium (TTC) that has been smeared with a standardized suspension of *Salmonella (S. aarhus, S. muenster El* & *S. worthington).* Efficacy of the AMI was validated by measuring how closely the *Salmonella* cultures grew with respect to the saturated filter paper.

Ingredients were screened for antimicrobial activity using the Disc Diffusion Test. Solutions of 1%, 2%, and 3% were prepared for each of these ingredients, except for oregano, which was prepared at 0.1%, 0.2%, and 0.4%. Soaking of the disks, placing them on a Standard Methods agar plate with TTC smeared with Salmonella and overnight incubation were done as discussed above. Efficacy of these ingredients was determined by measuring the clear zones (mm) around the disks (Table 2).

**Table 2. Results of Screening of Ingredients with Potential Antimicrobial Activity Against Salmonella by Disk Diffusion Test**

| **Ingredient** | R 1* | | R 2 | | R 3 | |
|---|---|---|---|---|---|---|
| | Partial | Total | Partial | Total | Partial | Total |
| | (mm) | (mm) | (mm) | (mm) | (mm) | (mm) |
| Oleoresin Oregano | | 5.67 | 2.67 | 9.0 | 2.8 | 9.08 |
| Cultured Dextrose, Powder | | | | | | |
| Cultured Dextrose, Powder Acid Salt | | | | 7.58 | | 6.17 |
| Cultured Dextrose, Powder Acid Salt | | | | | | |
| Liquid Flavor No. 1 | | | | 3.67 | | 7.83 |
| Liquid Flavor No. 2 | | 15 | 6.0 | 22.67 | 11.17 | 25.5 |
| Inorganic Acid (Phosphoric acid) | 9.33 | 16.67 | 14.33 | 24.0 | 21.0 | 28.33 |
| * 3 replicates | | | | | | |

Antimicrobial activity against Salmonella was observed as follows in decreasing order: Phosphoric acid > Phenols, pH 4.25-4.85>Oleoresin Oregano> 92% Sodium Lactate and 6% Sodium Diacetate>Phenols, pH 4.8-6.0.

### Example 2-Kibble Diffusion Test

The kibble diffusion test has similar principles as the disk diffusion method. Whole kibbles (finished product) coated with different levels of AMI (1%, 2%, and 3%, except for oregano 0.1%, 0.2%, and 0.4%) were used instead of the disks. Kibbles were placed on a Petri dish with standard methods agar with TTC that has been smeared with a standardized suspension of *Salmonella* (*S. aarhus, S. muenster El* & *S. worthington*). Efficacy of the AMI was validated by measuring how closely the Salmonella cultures grew with respect to the saturated kibbles.

Commercial canine and feline adult pet food compositions in the form of kibbles were coated with potential AMIs. Kibbles were placed on top of Standard Methods Agar with TTC already smeared with *Salmonella* (*S.* aarhus, *S*. *muenster El* and *S. worthington*). After incubation overnight at 30°C, plates were analyzed for presence of clear zones around the kibbles.

Propionic acid, phosphoric acid, lactic acid, phenols and Ca propionate inhibited *Salmonella* by showing a clear zone around the kibbles (Table 3).

**Table 3. Kibble Diffusion Test Results of Different Ingredients with Potential Antimicrobial Activity Against Salmonella**

| | **Zone of Inhibition-Diameter (mm)** | | | | | | |
|---|---|---|---|---|---|---|---|
| | **REP I** | | **REP II** | | **REP III** | | **Mean** |
| **Ingredient** | Plate 1 | Plate 2 | Plate 1 | Plate 2 | Plate 1 | Plate 2 | |
| Phosphoric acid 3% | 9 | 7 | 7 | 9 | 9 | 7 | 8 |
| Lactic acid 3% | 10 | 9 | 11 | 8 | 9 | 11 | 10 |
| Propionic acid chemical grade 3% | 30 | 28 | 31 | 34 | 33 | 30 | 31 |
| Propionic acid chemical grade 3% (in CWG) | 34 | 34 | 28 | 31 | 28 | 31 | 31 |
| Propionic Acid 0.65% | 8 | 10 | 5 | 10 | 13 | 5 | 9 |
| Propionic Acid 1.3% | 25 | 18 | 25 | 25 | 13 | 20 | 21 |
| Propionic Acid 2% | 47 | 49 | 47 | 43 | 30 | 25 | 40 |
| Ca propionate liquid 1% solution | 5 | 16 | 4 | 9 | 9 | 9 | 9 |
| Ca propionate liquid 2% solution | 19 | 14 | 18 | 19 | 16 | 14 | 17 |
| Ca propionate liquid 3% solution | 20 | 15 | 19 | 25 | 24 | 25 | 21 |

### Example 3- MIC (Minimum Inhibitory Concentration)

The minimum inhibitory concentration (MIC) of an antimicrobial ingredient is defined as the maximum dilution of the product that will still inhibit the growth of *Salmonella.* Serial dilutions (0-3%, except for oregano 0-0.3%) were made of the AMI in bacterial growth media and poured in test tubes. The test organisms (*S. aarhus, S. muenster El* and *S. worthington*) were then added to the dilutions of the AMI ingredients to a final concentration of 10⁶ or 10³ cfu/g, incubated overnight at 30°C, and scored for growth by turbidity or plate counts.

Minimum Inhibitory Concentration was conducted for 10³ and 10⁶ cfu/g Salmonella. Results reported as negative sign means inhibition, while positive sign denotes growth. Oregano needed a MIC of 0.15% to inhibit *Salmonella,* whereas, at least 0.9% was needed for phenol-pH 4.25-4.85, phenol-pH 2-2.5, phenol 2-2.5, Phosphoric acid, Lactic acid, Propionic Acid, Calcium propionate/zinc propionate, and sodium bisulfate, and 0.15% for Lauric Arginate (Tables 4 and 5).

**Table 4. MIC Results of Ingredients with Potential Antimicrobial Activity Against 10⁶ cfu/g Salmonella**

| **Ingredient** | **Antimicrobial Level (Antimicrobial %)** | | | | | | | | | |
|---|---|---|---|---|---|---|---|---|---|---|
| | 0.3 | 0.27 | 0.24 | 0.21 | 0.15 | 0.09 | 0.03 | 0.015 | 0.003 | 0 |
| Oregano | - | - | - | - | - | + | + | + | + | + |

| **Ingredient** | **Antimicrobial Level (Antimicrobial %)** | | | | | | | | | |
|---|---|---|---|---|---|---|---|---|---|---|
| | 3 | 2.7 | 2.4 | 2.1 | 1.5 | 0.9 | 0.3 | 0.15 | 0.03 | 0 |
| Phenols, pH 4.25-4.85 | - | - | - | - | - | - | + | + | + | + |
| Phenols, pH 4.8-6.0 | - | - | - | - | - | - | + | + | + | + |
| Phenols, pH 2-2.5 | - | - | - | - | - | - | + | + | + | + |
| Phosphoric Acid | - | - | - | - | - | - | + | + | + | + |
| Lactic Acid | - | - | - | - | - | - | + | + | + | + |
| Propionic Acid | - | - | - | - | - | - | - | + | + | + |
| Ca propionate, Zn propionate | - | - | - | - | - | - | + | + | + | + |
| Lauric Arginate | - | - | - | - | - | - | - | - | - | + |
| Sodium Bisulfate | - | - | - | - | - | - | - | + | + | + |

**Table 5. MIC Results of Ingredients with Potential Antimicrobial Activity Against 10³ cfu/g Salmonella**

| **Ingredient** | **Antimicrobial Level (Antimicrobial %)** | | | | | | | | | |
|---|---|---|---|---|---|---|---|---|---|---|
| | 0.3 | 0.27 | 0.24 | 0.21 | 0.15 | 0.09 | 0.03 | 0.015 | 0.003 | 0 |
| Oregano | - | - | - | - | - | + | + | + | + | + |

| **Ingredient** | **Antimicrobial Level (Antimicrobial %)** | | | | | | | | | |
|---|---|---|---|---|---|---|---|---|---|---|
| | 3 | 2.7 | 2.4 | 2.1 | 1.5 | 0.9 | 0.3 | 0.15 | 0.03 | 0 |
| Phenols, pH 4.25-4.85 | - | - | - | - | - | - | + | + | + | + |
| Phenols, pH 4.8-6.0 | - | - | - | - | - | - | + | + | + | + |
| Phenols, pH 2-2.5 | - | - | - | - | - | - | + | + | + | + |
| Phosphoric Acid | - | - | - | - | - | - | + | + | + | + |
| Lactic Acid | - | - | - | - | - | - | + | + | + | + |
| Propionic Acid | - | - | - | - | - | - | + | + | + | + |
| Ca propionate, Zn propionate | - | - | - | - | - | - | + | + | + | + |
| Lauric Arginate | - | - | - | - | - | - | - | - | - | + |
| Sodium Bisulfate | - | - | - | - | - | - | + | + | + | + |

### Example 4- Challenge Studies and Palatability Tests

Finished products coated with AMI (0-3%) were tested in a challenge study. Each kibble of 100 g kibbles were inoculated with *Salmonella* (*S. aarhus*, *S. muenster El* and *S. worthington*) to a final concentration of 10⁶, and incubated at 30°C. *Salmonella* counts were conducted at predetermined times intervals. Palatability studies (2 bowl, 2 day) were conducted for canine and feline adult pet food compositions with AMIs against a control with no AMIs.

Lactic acid, phenols-pH 4.25-4.85, phenols-pH 2-2.5, Propionic Acid, Lauric Arginate, Phosphoric Acid and Oregano were selected for microbial challenge and palatability studies. Canine and feline adult pet food compositions were made with different levels of these antimicrobials to conduct palatability tests (Tables 6-9).

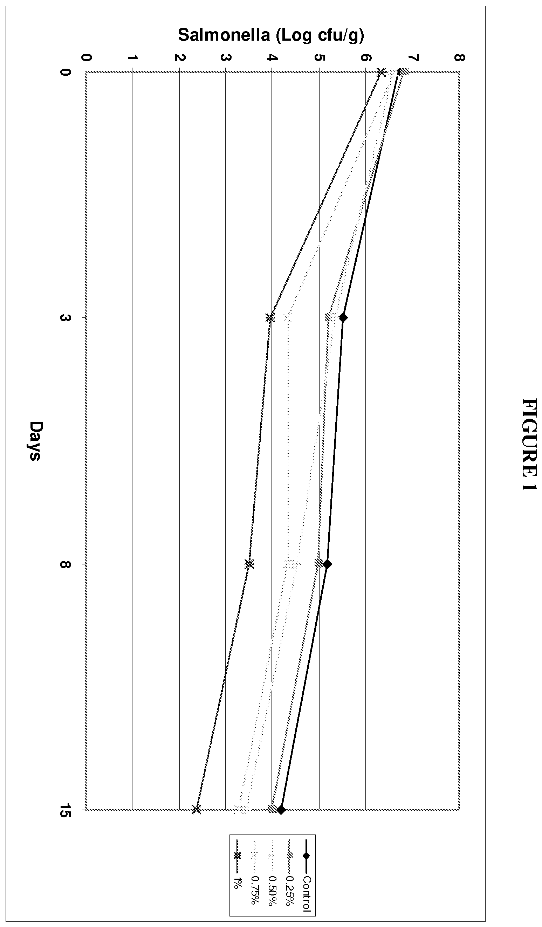

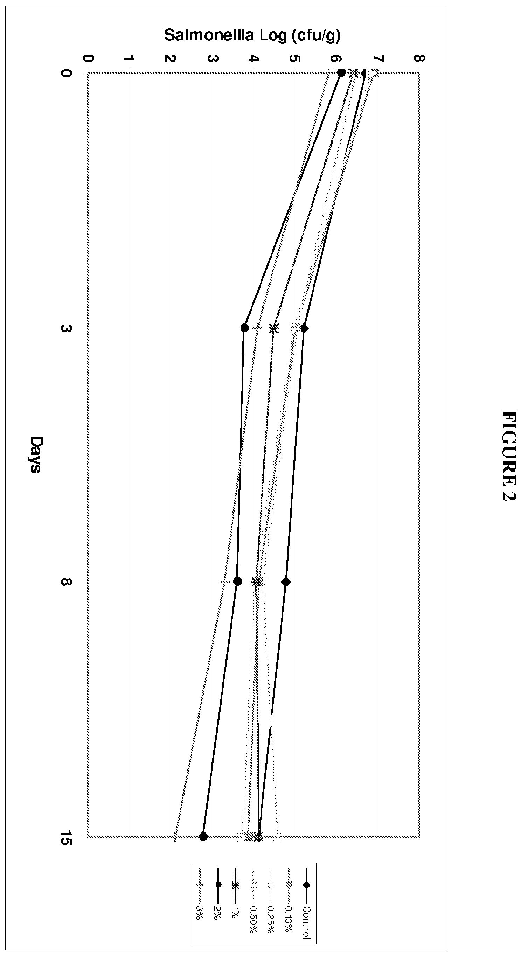

Canine adult pet food compositions with different levels of AMI were subjected to microbial challenge studies. 100 Gram portions of kibbles were inoculated to a final concentration of 10⁶ cfu/g *Salmonella,* and incubated at 30°C. *Salmonella* counts were conducted at predetermined time intervals. 1% lactic acid in the preconditioner and 2-3% added topically (mixed with DT10L^{®}) reduced *Salmonella* by two log cycles more than control (Figure 1 and Figure 2).

Palatability for canine adult pet food compositions with antimicrobials added topically or in the preconditioner was at least parity against a control (Tables 6 and 7). Feline adult pet food compositions with antimicrobials added in the preconditioner was at least parity against a control (Tables 8 and 9).

**Table 6. Palatability Results of Canine Pet Food Compositions with Antimicrobials Added Topically vs. a Control with no Antimicrobials**

| **Ingredient** | **Intake Ratio** | **% Preference Test/Control** |
|---|---|---|
| Lactic acid (%) | | |
| 0.13 | 0.5282 | 27/64 |
| 0.25 | 0.5043 | 42/46 |
| 0.50 | 0.5985 | 76/24 |
| 1.00 | 0.4343 | 39/61 |
| 2.00 | 0.3202 | 17/79 |
| 2.00 | 0.5903 | 56/36 |
| 3.00 | 0.5286 | 67/29 |
| 3.00 | 0.5544 | 58/29 |

| Phenol, pH 4.25-4.85 (%) | | |
|---|---|---|
| 0.25 | 0.5760 | 60/36 |

| Phenol, pH 2-2.5 (%) | | |
|---|---|---|
| 0.25 | 0.6178 | 68/24 |
| 0.50 | 0.5860 | 60/32 |
| 1.00 | 0.4527 | 21/67 |
| 2.00 | 0.4908 | 33/67 |
| 3.00 | 0.4178 | 32/52 |

| Propionic Acid (%) | | |
|---|---|---|
| 0.25 | 0.4199 | 21/71 |
| 0.50 | 0.8064 | 92/4 |
| 1.00 | 0.5410 | 54/46 |
| 2.00 | 0.5875 | 64/32 |
| 3.00 | 0.5060 | 44/52 |

| Lauric Arginate (%) | | |
|---|---|---|
| 0.1 | 0.6460 | 72/16 |
| 0.2 | 0.5100 | 38/50 |
| 0.4 | 0.5993 | 56/32 |
| 0.8 | 0.4628 | 36/56 |

| Phosphoric acid (%) | | |
|---|---|---|
| 0.25 | 0.5149 | 28/48 |

| Oregano (%) | | |
|---|---|---|
| 0.038 | 0.4452 | 22/65 |
| 0.075 | 0.5461 | 67/29 |
| 0.150 | 0.3117 | 13/80 |
| 0.300 | Cancelled | |

**Table 7. Palatability Results of Canine Pet Food Compositions with Antimicrobials Added in Topically vs. a Control with no Antimicrobials**

| **Ingredient** | **Intake Ratio** | **% Preference Test/Control** |
|---|---|---|
| Phenol, pH 2-2.5 (%) | | |
| 0.25 | 0.4497 | 38/56 |
| 0.50 | 0.4297 | 24/68 |
| 1.00 | 0.4576 | 44/52 |
| 2.00 | 0.4192 | 28/60 |
| 3.00 | 0.5601 | 64/28 |

| Propionic Acid (%) | | |
|---|---|---|
| 0.50 | 0.6100 | 84/4 |
| 1.00 | 0.5165 | 48/40 |
| 2.00 | 0.5029 | 48/40 |
| 3.00 | 0.4209 | 40/56 |

| Lauric Arginate | | |
|---|---|---|
| 0.1 | 0.5475 | 58/29 |
| 0.2 | 0.3390 | 13/82 |
| 0.4 | 0.4883 | 46/46 |
| 0.8 | 0.3228 | 13/80 |

| Phosphoric acid (%) | | |
|---|---|---|
| 0.25 | 0.4983 | 48/44 |

| Oregano (%) | | |
|---|---|---|
| 0.038 | 0.4998 | 44/48 |
| 0.075 | 0.4933 | 38/50 |
| 0.150 | 0.4267 | 52/44 |
| 0.300 | 0.4680 | 50/46 |

**Table 8. Palatability Results of Feline Pet Food Compositions with Antimicrobials Added Topically vs. a Control with no Antimicrobials**

| **Ingredient** | **Intake Ratio** | **% Preference Test/Control** |
|---|---|---|
| Lactic acid (%) | | |
| 0.25 | 0.5451 | 52/40 |
| 0.50 | 0.2834 | 13/83 |
| 0.75 | 0.2411 | 8/88 |
| 1.00 | 0.3445 | 20/80 |
| 2.00 | 0.3032 | 16/80 |
| 3.00 | 0.1192 | 9/91 |

| Phenol, pH 4.25-4.85 (%) | | |
|---|---|---|
| 0.25 | 0.4747 | 36/60 |

| Phenol, pH 2-2.5 (%) | | |
|---|---|---|
| 0.25 | 0.4112 | 36/60 |
| 0.50 | 0.3265 | 25/67 |
| 0.75 | 0.2652 | 25/75 |
| 1.00 | 0.1279 | 8/92 |
| 2.00 | 0.1586 | 13/88 |
| 3.00 | 0.2412 | 12/88 |

| Propionic Acid (%) | | |
|---|---|---|
| 0.25 | 0.3964 | 32/68 |
| 0.50 | 0.4393 | 33/58 |
| 0.75 | 0.3889 | 24/72 |
| 1.00 | 0.4516 | 36/55 |
| 2.00 | 0.2591 | 13/87 |
| 3.00 | 0.1601 | 4/96 |

| Lauric Arginate (%) | | |
|---|---|---|
| 0.1 | 0.4583 | 39/52 |
| 0.2 | 0.5203 | 46/46 |
| 0.4 | 0.3132 | 20/72 |
| 0.8 | 0.1002 | 0/100 |

| Oregano (%) | | |
|---|---|---|
| 0.038 | 0.2697 | 17/79 |
| 0.075 | 0.3574 | 32/68 |
| 0.150 | 0.3028 | 24/76 |
| 0.300 | 0.0861 | 5/95 |

**Table 9. Palatability Results of Feline Pet Food Compositions with Antimicrobials Added in Topically vs. a Control with no Antimicrobials**

| **Ingredient** | **Intake Ratio** | **% Preference Test/Control** |
|---|---|---|
| Lactic acid (%) | | |
| 0.25 | 0.4891 | 46/50 |
| 0.50 | 0.4986 | 48/36 |
| 0.75 | 0.3981 | 32/64 |
| 1.00 | 0.5567 | 46/38 |
| 2.00 | 0.4804 | 42/54 |
| 3.00 | 0.5111 | 54/38 |

| Phenol, pH 4.25-4.85 (%) | | |
|---|---|---|
| 0.25 | 0.4735 | 40/56 |
| 0.50 | 0.5807 | 60/32 |
| 0.75 | 0.4999 | 42/58 |
| 1.00 | 0.5342 | 63/33 |
| 2.00 | 0.3947 | 35/61 |
| 3.00 | 0.4982 | 50/45 |

| Phenol, pH 2-2.5 (%) | | |
|---|---|---|
| 0.25 | 0.4517 | 36/56 |
| 0.50 | 0.3271 | 26/65 |
| 0.75 | 0.3435 | 27/64 |
| 1.00 | 0.3787 | 29/67 |
| 2.00 | 0.2955 | 26/74 |
| 3.00 | 0.4248 | 42/58 |

| Oregano (%) | | |
|---|---|---|
| 0.038 | 0.5223 | 46/42 |
| 0.075 | 0.4373 | 48/40 |
| 0.150 | 0.4691 | 40/56 |
| 0.300 | 0.5301 | 50/46 |

| Lauric Arginate (%) | | |
|---|---|---|
| 0.10 | 0.5124 | 44/44 |
| 0.20 | 0.6648 | 83/17 |
| 0.40 | 0.5180 | 52/44 |
| 0.80 | 0.5492 | 63/33 |

### Example 5 - Production of Kibble Coated with Propionic Acid

### Sample Preparation and Incubation

Canine adult pet food compositions with Propionic Acid were produced. Samples were taken to simulate different steps of the process. 1) Kibble was dropped onto a conveyor belt, run through the cooler, and then packaged. This was to simulate product coming off the extruder and running through the airlift to the dryer. Moisture target was about 20%. 2) The dryer temperature was reduced and belt speed increased. This was to simulate product in the dryer at the plant that was partially dried-possibly coming off the first belt and dropping to the second belt. Moisture target was about 15%. 3) Dry kibble was collected after the dryer for both uncoated base and finished product. Moisture target was about 8%.

Kibble with intermediate moisture (15% and 20%) was cooled to prevent condensation in the bag and not encourage mold growth.

Extruder, dryer, uncoated base and finished product samples (10 kg each) were inoculated with *Salmonella* 10⁶ cfu/g. A concentrated solution of *Salmonella* in buffer solution was atomized through a paint sprayer and uniformly applied as product was tumbled in a rotary mixer to deliver the target cfu/g.

Uncoated base samples were coated with topicals (palatants and fat) after inoculation (Table 10).

**Table 10. Canine Adult Pet Food Compositions for Uncoated Base Inoculated with Salmonella**

| **Ingredient** | **%** | **lbs** |
|---|---|---|
| Uncoated Base | 92.51 | 20.35 |
| Topicals | 7.49 | 1.65 |
| Total | 100 | 22 |

Samples were split and incubated in a 30, 50 or 70°C incubator. These temperatures were chosen to represent finished product that had not yet cooled to ambient (30°C), product part way through the dryer and was beginning to absorb heat from the dryer (70°C), and product that was transferred through the airlift and had flashed off a portion of its moisture subjecting it to rapid evaporative cooling (50°C).

Samples at 70°C were plated after 0, 15, 30 and 60 minutes.

Samples at 50°C were plated after 0, 30, 60 and 240 minutes.

Samples at 30°C were plated after 0, 1, 2, 3, 8 and 15 days.

Plating times and duration were selected to try and represent conditions the product typically would be exposed to in the dryer. Durations for any of the intermediate conditions would not exceed 20 minutes during normal production, but the extended time in the incubator allowed a separation of the process variables, gave the laboratory technicians time to pull samples and work with them, and provided some discrete time intervals to measure the effect of the treatments.

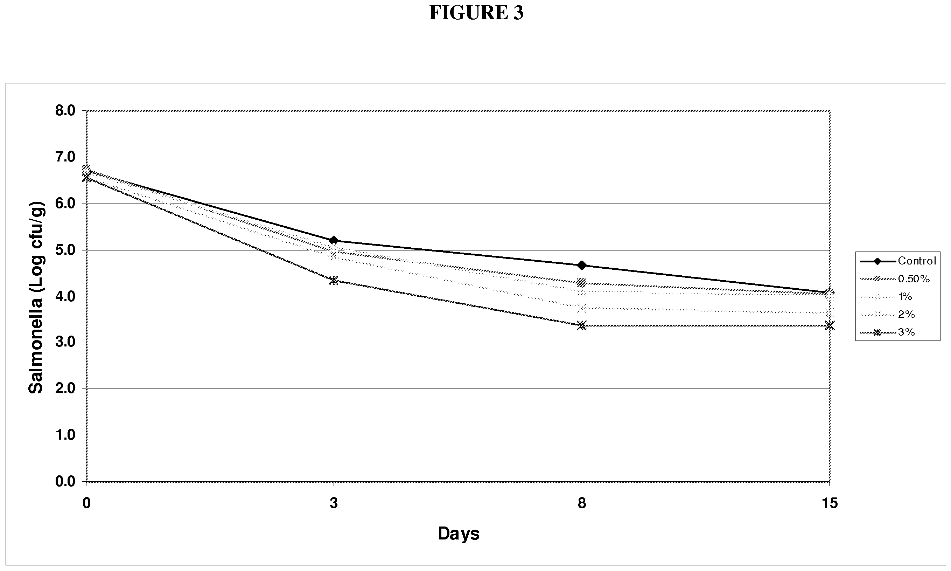

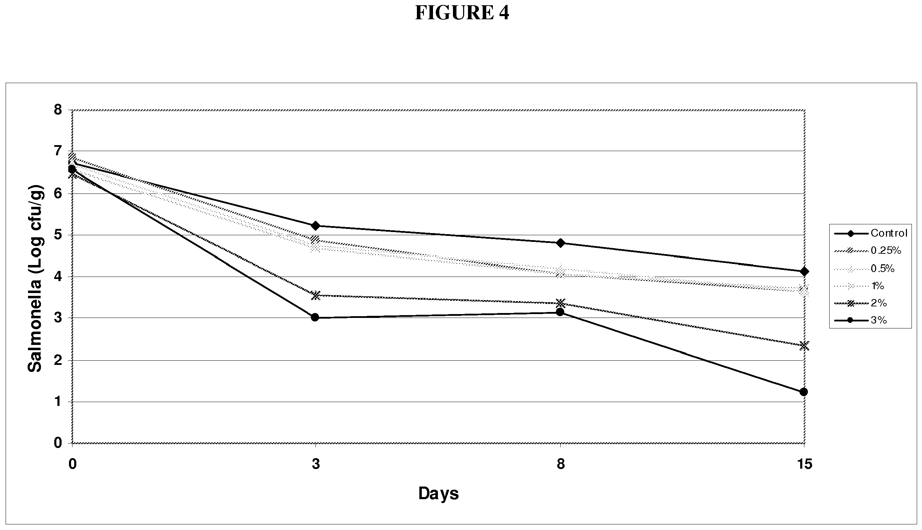

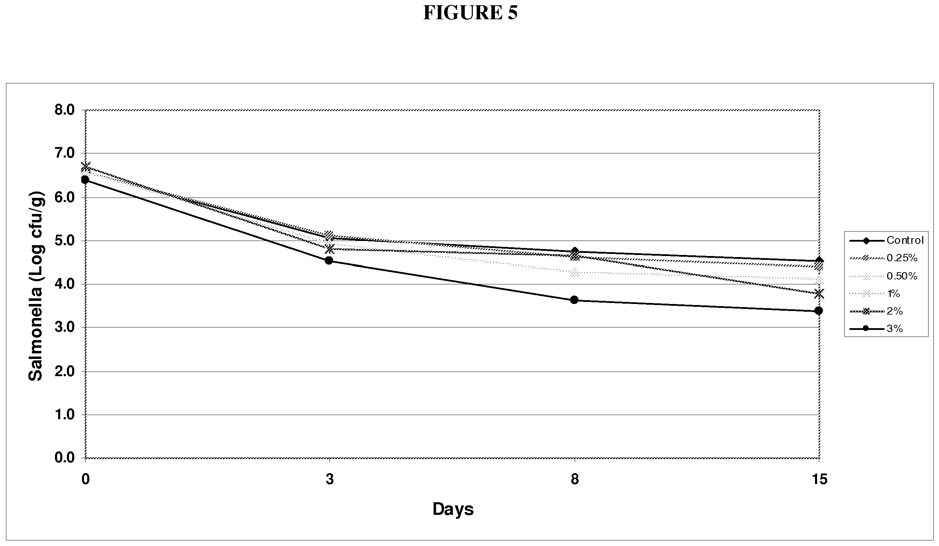

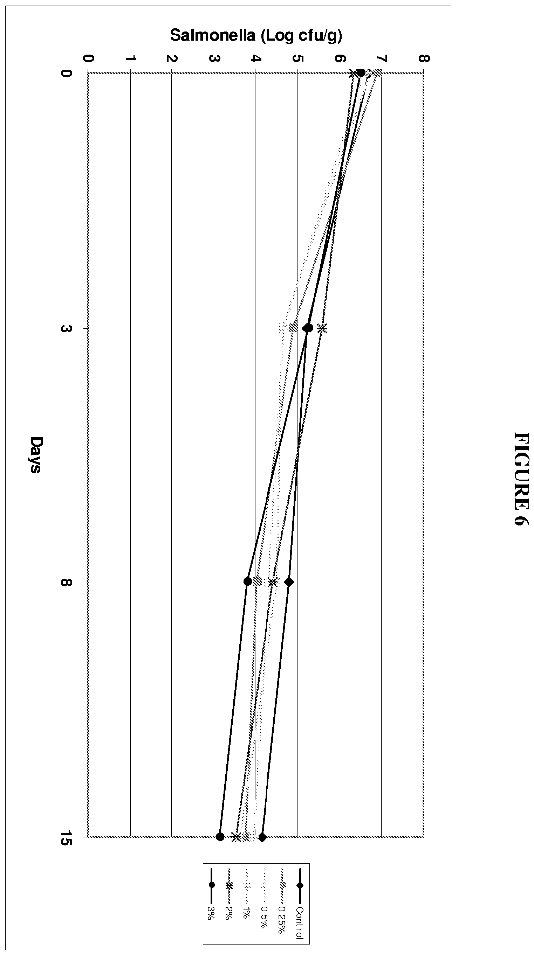

Product coated and inoculated with *Salmonella* (representing finished product contaminated after enrober) showed some immediate effect from the inclusion of 3% Propionic Acid in the preconditioner (Figure 3). A positive effect was also shown with 2% and 3% Propionic Acid added topical/preconditioner (Figure 4). Topical application of 1%, 2% and 3% Propionic Acid also showed a positive effect (Figure 5). Product coated and inoculated (represents kibbles contaminated before enrobing) showed similar results with 3% Propionic Acid (Figures 6-8).

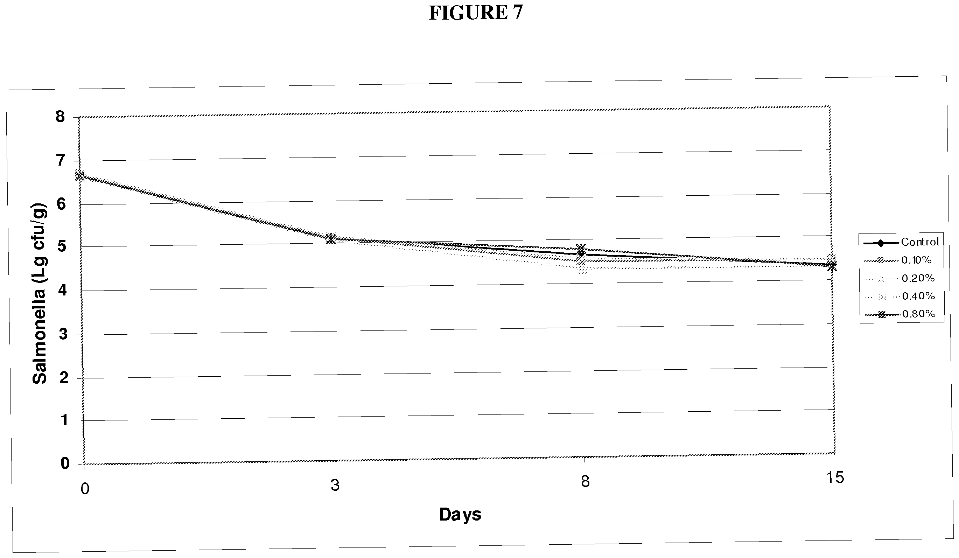

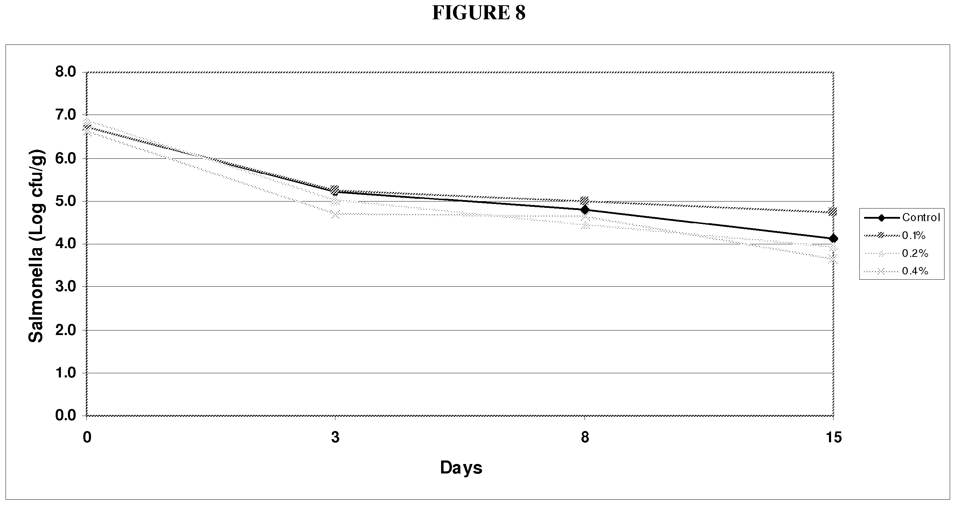

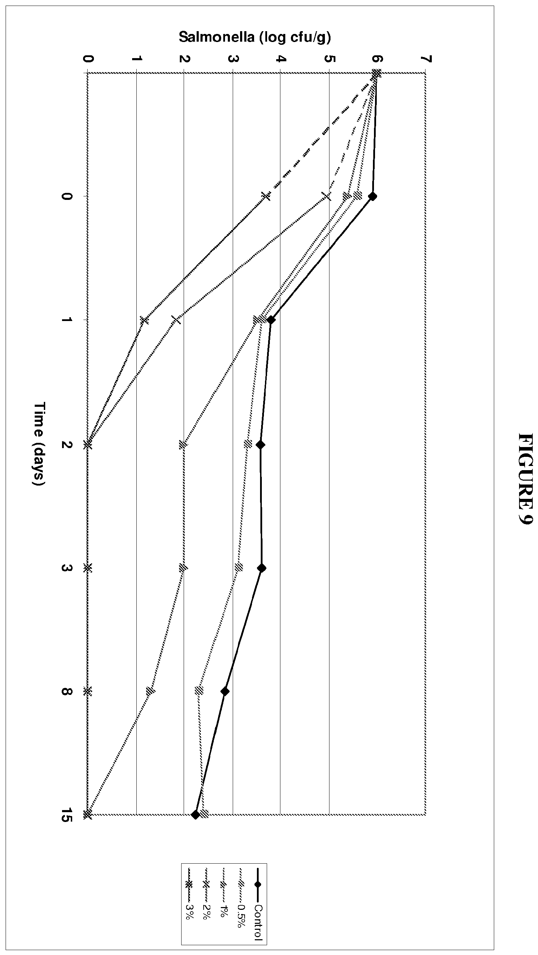

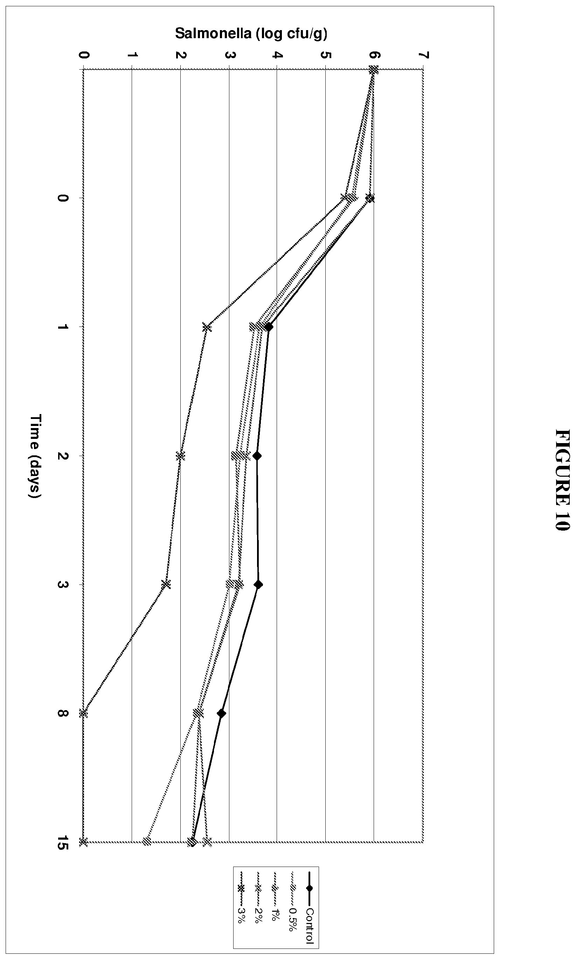

Propionic Acid in concentrations of 1%, 2%, and 3% was also efficacious against *Salmonella* at all points of processing. Reduction of two logs more than control were observed for product simulating entry to the airlift (Figure 7), during evaporative cooling (Figure 8), in the dryer after surface cooling (Figure 9), and evaporative cooling (Figure 10).

Scale up testing with Propionic Acid showed that the addition of 3% Propionic Acid in preconditioner, 2 and 3% topical/preconditioner and 1, 2 and 3% topically applied reduced *Salmonella* by two log cycles more than an untreated control.

### Example 6 - Production of Kibble Coated with Lactic Acid

Finished product contamination of dry dog food with *Salmonella* may be divided into 4 locations - 1) air lift or entry to the dryer, 2) in the dryer, 3) uncoated kibble (through Ro-Tap^{®} and until enrober), and 4) coated kibble (from the enrober through the packaging system). Kibble is processed in an extruder at a high temperature and pressure. These conditions (122°C and 15 psi) are similar to those found inside a retort and believed to produce a kibble with commercial sterility. Wet kibble leaves the extruder and flashes back to 100°C. The rapid drop in pressure causes the kibble to puff and form its rounded shape and target density. The surface of the kibble is rapidly cooled by the high volume of air transporting it in the airlift from the extruder to the dryer. Evaporative cooling drops the surface temperature to approximately 50°C and then the kibble begins to absorb heat from the dryer. Upon exiting the dryer kibble has re-warmed to approximately 70°C and is sifted in the Ro-Tap^{®} at which point it may be exposed to cool moist air depending on ambient conditions in the plant. Kibble is then enrobed (coated with topical liquid and dry ingredients). Following the enrober there is a minimal moisture loss as the kibble is cooled to ambient conditions and then held for packaging.

Testing of these four locations is modeled using a complete balanced block design of 3 moisture contents (8%, 15%, and 22%), 3 temperatures (30°C, 50°C, and 70°C), 4 levels of lactic acid (0.5%, 1%, 2% and 3% lactic acid plus a negative control), and 3 locations for inclusion of the lactic acid (all lactic acid added in preconditioner, all lactic acid added in enrober, and a 50/50 blend of half lactic acid added in the preconditioner and half added in the enrober) (Table 12).

The effect of lactic acid against a cocktail of *Salmonella* species (*S. aarhus*, *S. muenster El* and *S. Worthington*) is tested at different steps in the process.

### Sample Preparation and Incubation:

| | 70° C | 50° C | 30° C |
|---|---|---|---|
| 22% moisture/uncoated | Represents product in the air lift. Temperature is still hostile and should be lethal to bacteria. | Represents product entering the dryer. Surface temperature is low enough to incubate bacteria. | Wet product may never cool this low, but provides non-destructive temperature with a high moisture kibble. |
| 15% moisture/uncoated | Represents kibble in the middle of the dryer after moisture plateaus and surface temperature begins to rise. | Represents kibble in the middle of the dryer during evaporative cooling. | Intermediate product may not cool this low, but provides non-destructive temperature for an intermediate product. |
| 8% moisture/uncoated | Represents kibble exiting the dryer. | May represent some kibble exiting the dryer. | Probably not a representative temperature before enrobing, but balances the design. |
| 8% moisture/coated | Represents kibble in the enrober. | Represents kibble part way through the cooler. | Represents finished product. |

Canine pet food compositions with lactic acid are produced. Samples are produced to simulate different steps of the process. 1) Kibble is dropped onto a conveyor belt, run through the cooler, and then packaged. This is to simulate product coming off the extruder and running through the airlift to the dryer. Moisture target is about 20%. 2) The dryer temperature is reduced and belt speed increased. This is to simulate product in the dryer at the plant that is partially dried-possibly coming off the first belt and dropping to the second belt. Moisture target is about 15%. 3) Dry kibble is collected after the dryer for both uncoated base and finished product. Moisture target is about 8%. This is to represent typical production.

Kibble with intermediate moisture (15% and 20%) is cooled to ambient temperature to prevent condensation in the bag and to discourage mold growth.

Extruder, dryer, uncoated base and finished product samples (22 lbs. each) are inoculated with *Salmonella* species 10⁶ cfu/g. A concentrated solution of salmonellae cocktail in buffer solution is atomized through a paint sprayer and uniformly applied as product is tumbled in a rotary mixer to deliver the target cfu/g.

Uncoated base samples are coated with topicals after inoculation (Table 12).

**Table 12. Canine Pet Food Compositions for Uncoated Base Inoculated with Salmonella**

| **Ingredient** | **%** | **lbs** |
|---|---|---|
| Uncoated Base | 92.51 | 20.35 |
| Topicals | 7.49 | 1.65 |
| Total | 100 | 22 |

Samples are incubated in a 30, 50 or 70°C incubator. These temperatures are chosen to represent finished product that had not yet cooled to ambient (30°C), product part way through the dryer and is again beginning to absorb heat from the dryer (70°C), and product that is transferred through the airlift and had flashed off a portion of its moisture subjecting it to rapid evaporative cooling (50°C).

Samples at 70°C are plated at 0, 15, 30 and 60 minutes

Samples at 50°C are plated at 0, 30, 60 and 240 minutes

Samples at 30°C are plated at 0, 1, 2, 3, 8 and 15 days

Plating times and duration are selected to represent conditions the product typically would be exposed to in the dryer. Durations for any of the intermediate conditions would not exceed 20 minutes during normal production, but the extended time in the incubator allows a separation of the process variables, gives the laboratory technicians time to pull samples and work with them, and provides some discrete time intervals to measure the effect of the treatments.

This scale-up study tests the effects of lactic acid against a cocktail of *Salmonella* species (*S.aarhus, S. muenster El* & *S. Worthington*). Products are analyzed for moisture. Analysis is done in duplicate and results demonstrate that moisture targets in the pilot plant are met.

Testing with lactic acid shows that the addition of 1%, 2% and 3% lactic acid in preconditioner, topical/preconditioner, and topically applied reduces *Salmonella* by two log cycles more than an untreated control.

Application of lactic acid at either the preconditioning stage or the enrobing stage is shown to be effective. The concentration of lactic acid is critical. An increasing inhibitory effect is shown as the concentration increases.

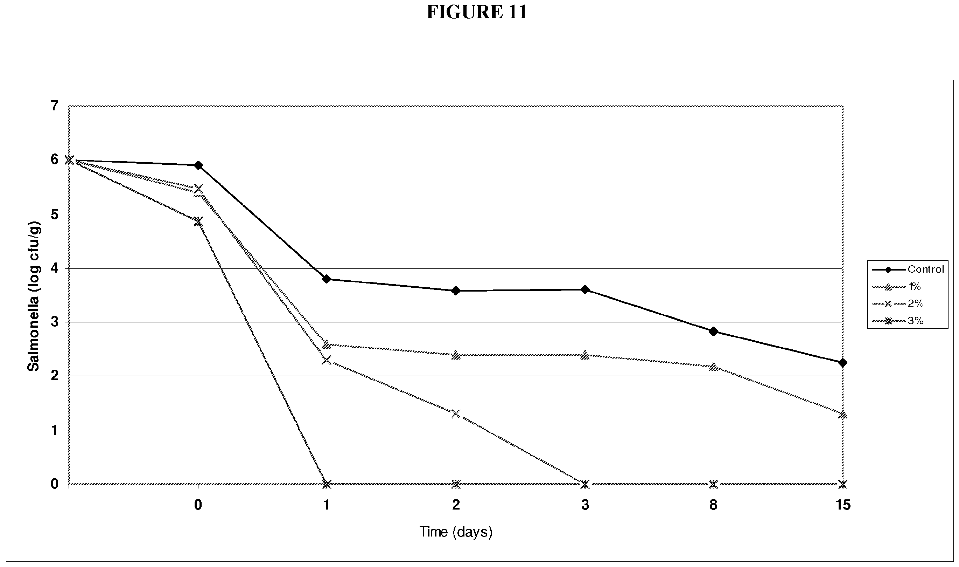

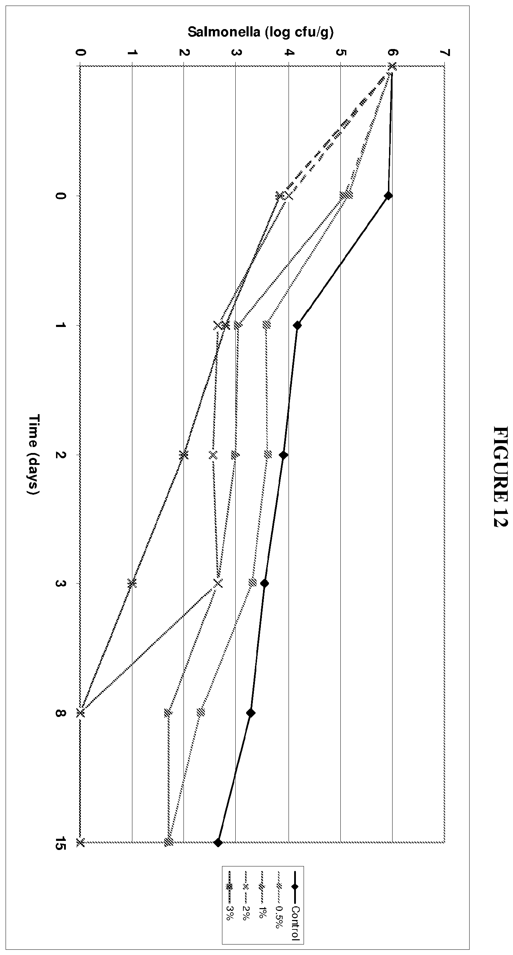

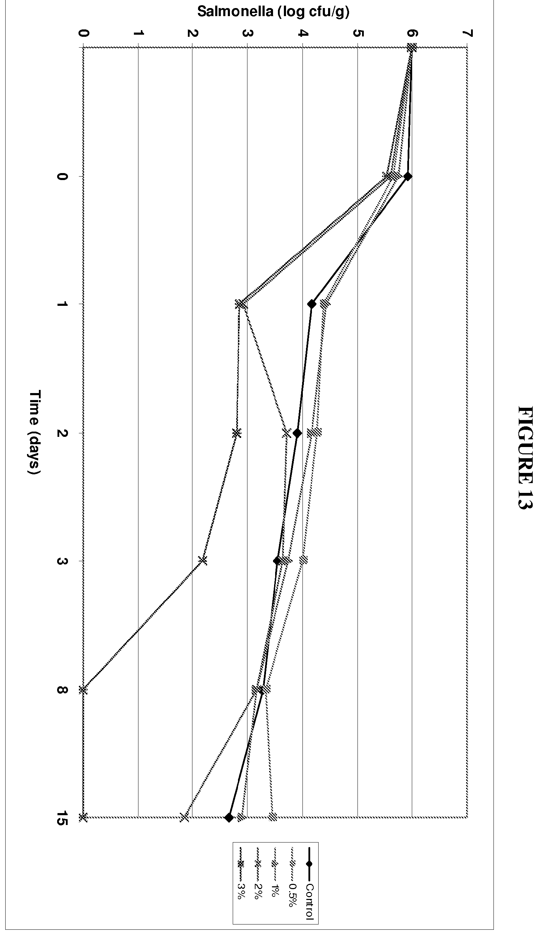

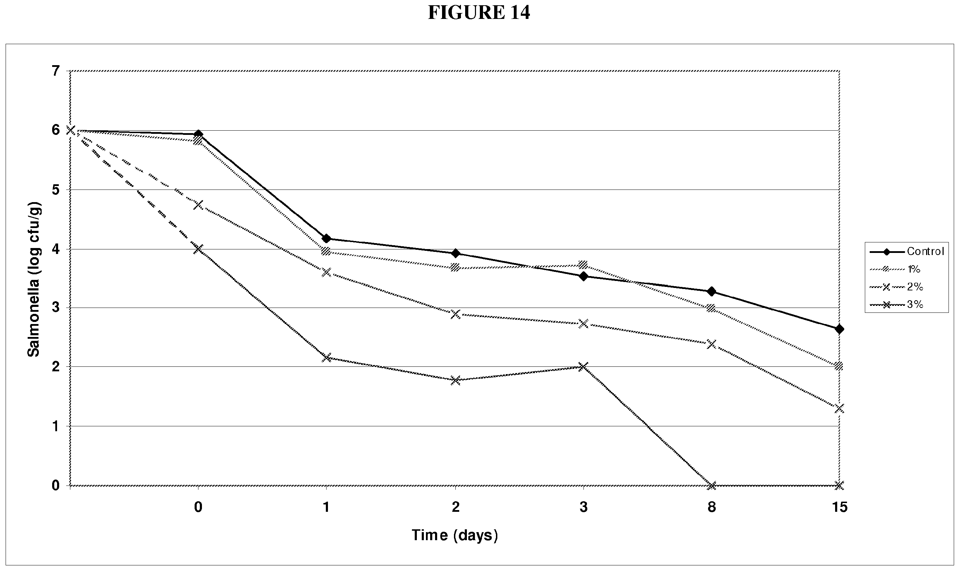

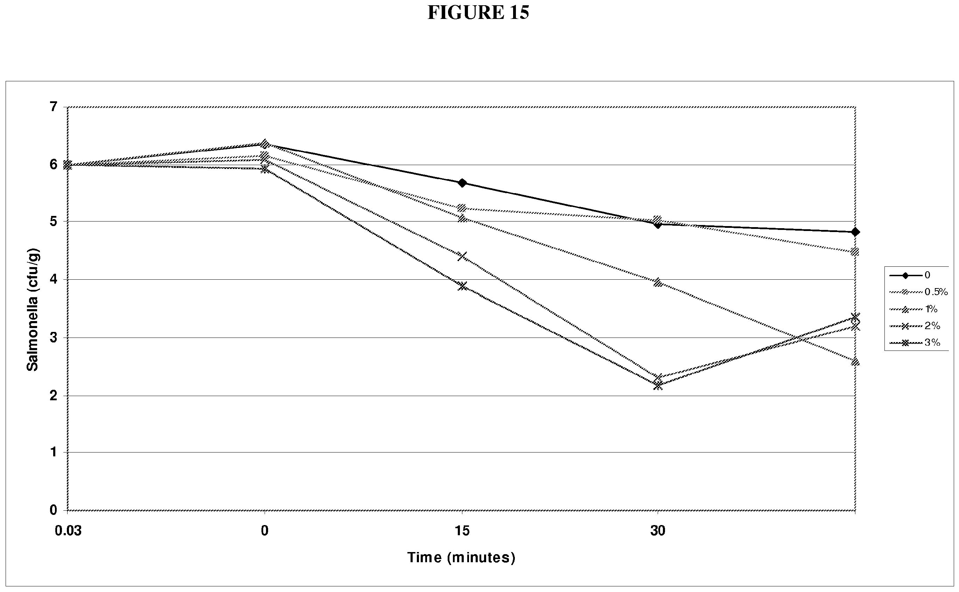

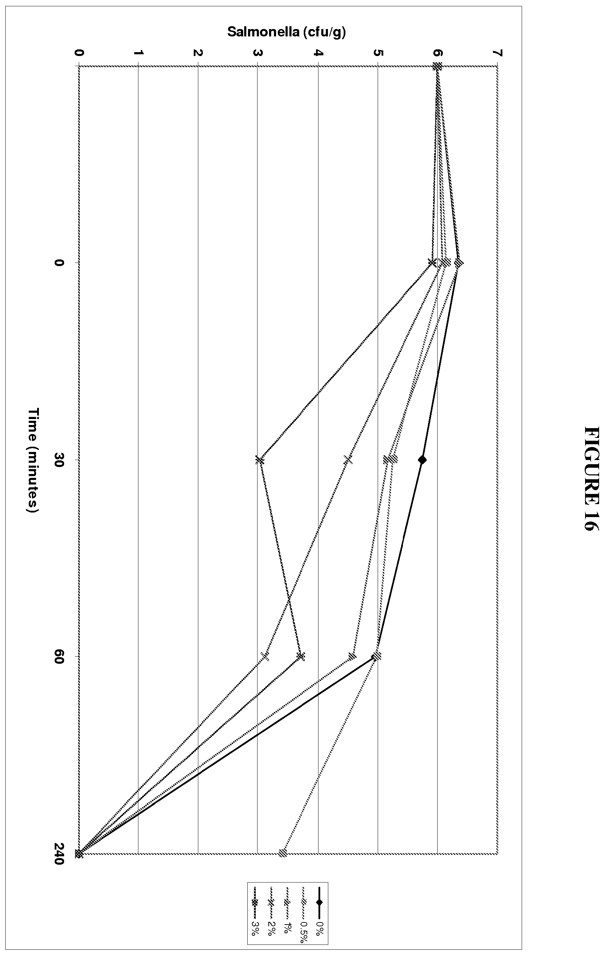

Product coated and inoculated with *Salmonella* (representing finished product contaminated after enrober) showed some immediate effect from the higher concentrations of lactic acid treatment (Figures 11-13). Product inoculated and then coated represents kibbles contaminated before enrobing) showed similar results at the highest concentrations of lactic acid (Figure 14-16).

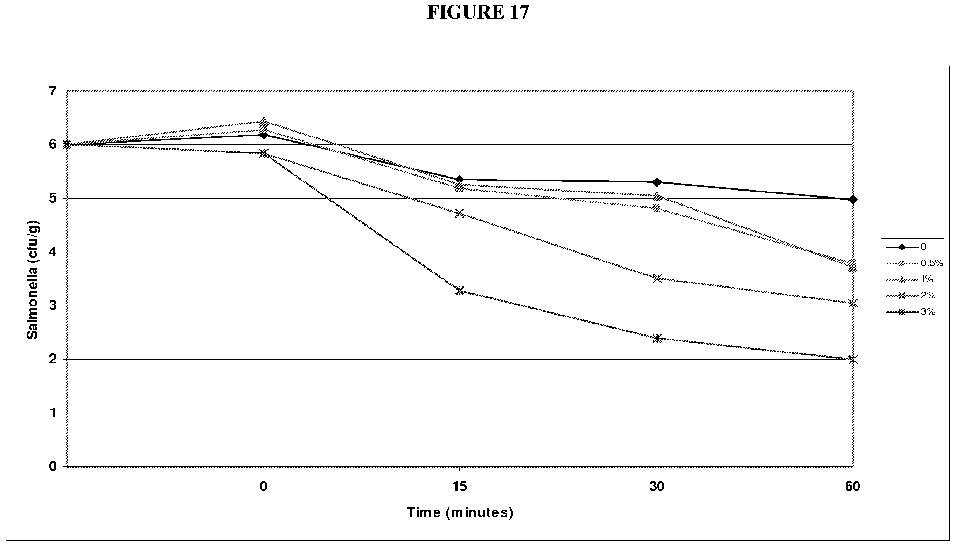

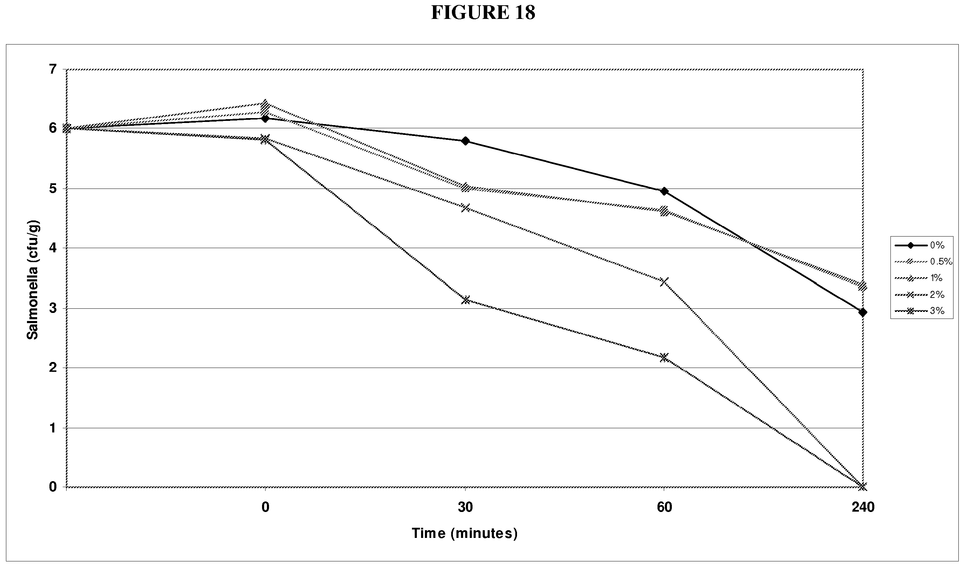

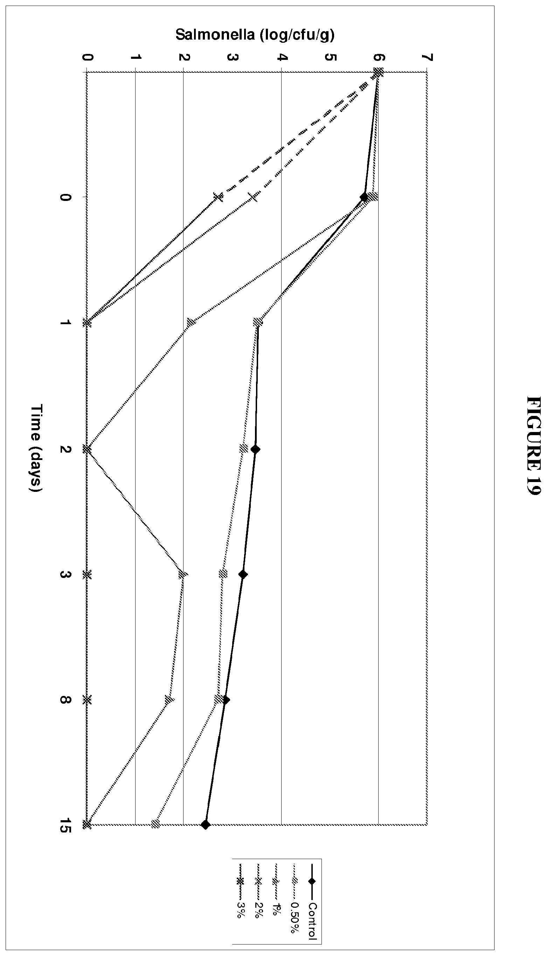

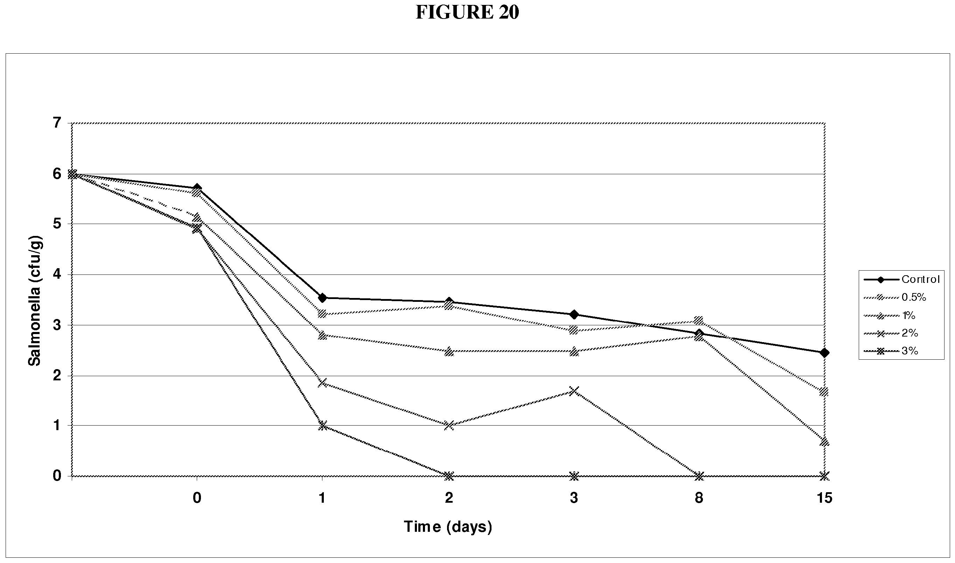

Lactic acid (1%, 2% and 3%) is also efficacious against *Salmonella* at all points of processing points. Reduction of two logs more than control are observed for product entering the airlift (Figure 17), during evaporative cooling (Figure 18), in dryer after surface temperature begins to rise (Figure 19), evaporative cooling (Figure 20) and finished product (Figures 11-16).

Lactic acid is thus effective against *Salmonella* in the formulations. It has an immediate effect on the viability of the salmonellae cocktail. A minimum concentration threshold of about 1% is demonstrated efficacious.

### Example 7 - Palatability of Formulations

Palatability of the canine kibble formulations with varying levels of lactic acid added as a topical coating and formulations with the lactic acid added in the preconditioning step is tested in dogs vs. a control, with an intake ratio of between 0.5-0.77, wherein an intake ratio of 0.5 indicates that the dogs had an equal intake of test and control food. The results are shown in Table 13.

**Table 13-Palatability Results**

| **Lactic Acid (%)** | **% Pref Test/Control** |
|---|---|
| TOPICAL | |
| 0.13 | 27/64 |
| 0.25 | 42/46 |
| 0.50 | 76/24 |
| 1.00 | 39/61 |
| 2.00 | 56/36 |
| 3.00 | 67/29 |

| PRECONDITIONER | |
|---|---|
| 0.25 | 88/8 |
| 0.50 | 80/16 |
| 0.75 | 64/28 |
| 1.00 | 56/36 |

Further tests were conducted on different commercial canine and feline kibble formulations, confirming that the kibble coated with lactic acid is palatable and accepted by dogs and cats. To avoid risk of stomach irritation in susceptible animals, it is determined to maintain pH at 4.5 or above.

## Claims

1. A method for making a pet food composition having antimicrobial activity against *Salmonella* comprising the following steps:
a. preconditioning by mixing wet and dry ingredients at elevated temperature to form a kibble dough;
b. extruding the kibble dough at a high temperature and pressure;
c. drying the extruded kibble; and
d. enrobing the dried kibble with topical liquid and/or dry ingredients;
wherein an ingredient which imparts an antimicrobial effect on the composition is applied to the kibble at step a and/or d in an amount of 1% to 3% by weight of the composition, wherein the antimicrobial ingredient has activity against *Salmonella,* the composition is a dry cat food or dry dog food, and wherein the ingredient is lactic acid.

2. The method of claim 1 wherein the composition has a pH of from about 4 to about 5.

## Patentansprüche

1. Verfahren zu Herstellung einer Haustierfutterzusammensetzung, die antimikrobielle Aktivität gegen *Salmonella* aufweist, das die folgenden Schritte umfasst:
a. Vorbehandeln durch Mischen von nassen und trockenen Bestandteilen bei erhöhter Temperatur, um einen Trockenfutterteig zu bilden;
b. Extrudieren des Trockenfutterteigs bei erhöhter Temperatur und Druck;
c. Trocknen des extrudierten Trockenfutterteigs; und
d. Überziehen des getrockneten Trockenfutterteigs mit topischen flüssigen und/oder trockenen Bestandteilen;
wobei ein Bestandteil, welcher der Zusammensetzung eine antimikrobielle Wirkung verleiht, dem Trockenfutter in Schritt a und/oder d in einer Menge von 0.1 Gewichts-% bis 3 Gewichts-% der Zusammensetzung zugefügt wird,
wobei der antimikrobielle Bestandteil Aktivität gegen *Salmonella* aufweist, die Zusammensetzung ein trockenes Katzenfutter oder trockenes Hundefutter ist und wobei der Bestandteil Milchsäure ist.

2. Verfahren nach Anspruch 1, wobei die Zusammensetzung einen pH von etwa 4 bis etwa 5 aufweist.

## Revendications

1. Procédé de fabrication d'une composition alimentaire pour animaux de compagnie présentant une activité antimicrobienne contre *Salmonella* comprenant les étapes suivantes :
a. préconditionnement par mélange des ingrédients secs et humides à température élevée pour former une pâte à croquettes ;
b. extrusion de la pâte à croquettes à une température et une pression élevées ;
c. séchage des croquettes extrudées ; et
d. enrobage des croquettes sèches avec un liquide topique et/ou des ingrédients secs ;
dans lequel un ingrédient qui confère un effet antimicrobien à la composition est appliqué sur la croquette à l'étape a) et/ou d) en une quantité de 1 % à 3 % en poids de la composition, dans lequel l'ingrédient antimicrobien présente une activité contre *Salmonella,* la composition est un aliment sec pour chat ou un aliment sec pour chien, et dans lequel l'ingrédient est l'acide lactique.

2. Procédé selon la revendication 1, dans lequel la composition a un pH d'environ 4 à environ 5.
